# EUROPÄISCHE PATENTSCHRIFT

(11) **EP 3 801 144 B1**
(45) Veröffentlichungstag und Bekanntmachung des Hinweises auf die Patenterteilung: **15.05.2024**
(21) Anmeldenummer: 19727318.8
(22) Anmeldetag: 21.05.2019
(51) Int. Cl.: A47J 27/21, A47J 36/24

(54) **KOCHGEFÄSS UND KOCHGEFÄSS-SYSTEM**
COOKING VESSEL AND COOKING-VESSEL SYSTEM
RÉCIPIENT DE CUISSON ET SYSTÈME DE RÉCIPIENT DE CUISSON

(30) Priorität: 24.05.2018 CH 6522018
(43) Veröffentlichungstag der Anmeldung: 14.04.2021
(73) Patentinhaber: Wired Cooking AG, 8047 Zürich (CH)
(72) Erfinder: GANZ, Jochen, 8610 Uster (CH)
(74) Vertreter: Troesch Scheidegger Werner AG
(86) Internationale Anmeldenummer: PCT/EP2019/063088
(87) Internationale Veröffentlichungsnummer: WO 2019/224195

(56) Entgegenhaltungen:
- EP-A1- 0 037 215
- EP-A1- 2 854 604
- EP-A1- 3 141 162
- EP-B1- 2 854 604
- WO-A1-2012/085602
- WO-A1-2017/080186
- GB-A- 2 320 672
- US-A1- 2008 053 984

## Beschreibung

### TECHNISCHES GEBIET

Die vorliegende Erfindung betrifft ein Kochgefäss, insbesondere eine Kochpfanne für die Zubereitung von Speisen und ein Kochgefäss-System mit solchen Kochgefässen.

### STAND DER TECHNIK

Aus dem Stand der Technik sind Kochgefässe bekannt, bei denen ein Temperatursensor im Bereich des Gefässbodens angebracht ist, welcher über einen elektrischen Leiter mit einer Elektronikeinheit verbunden ist, welche im Griff des Kochgefässes untergebracht ist. Mit diesen Kochgefässen wird auf einem heizbaren Kochfeld gekocht. Solche Kochgefässe haben den Nachteil, dass sie nicht spülmaschinenfest sind.

Bei anderen Kochgefässen werden spülmaschinenfeste Einsätze in eine heizbare Aufnahme eingesetzt, welche einen Temperatursensor und eine Elektronikeinheit umfasst. Solche Kochgefässe haben den Nachteil, dass die Wärmeübertragung von der Aufnahme zum Einsatz nicht sehr energieeffizient ist.

Beispielsweise offenbart die WO 2017/080186 A1 ein Kochgefäss, welches auf einer Basisstation aufsetzbar ist, wobei die Basisstation eine kabelgebundene Stromversorgung umfasst. Auch EP 2 854 604 A offenbart ein Kochgefäss.

### BESCHREIBUNG DER ERFINDUNG

Eine Aufgabe der vorliegenden Erfindung besteht darin, ein Kochgefäss bereitzustellen, bei welchem die obengenannten Nachteile vermieden werden.

Diese Aufgabe wird durch ein Kochgefäss mit den Merkmalen des Anspruchs 1 gelöst. Weitere Ausführungsformen des Kochgefässes, sowie ein Kochgefäss-System, sind durch die Merkmale von weiteren Ansprüchen definiert.

Ein erfindungsgemässes Kochgefäss umfasst einen Behälter mit einem Boden und einer geschlossen umlaufender Wand, welche sich vom Boden aus erstreckt. Der Boden und die Wand begrenzen einen Aufnahmeraum. Das Kochgefäss umfasst weiter mindestens ein Heizelement, welches unterhalb des Aufnahmeraums angeordnet ist, mindestens einen Temperatursensor, welcher im Boden und/oder in der Wand des Behälters angeordnet ist, eine Elektronikeinheit, welche eine Steuereinheit zur Steuerung der Temperatur des mindestens einen Heizelements und eine Stromversorgung umfasst. Das Heizelement ist im Boden des Behälters angeordnet. Der Behälter umfasst einen ersten Anschluss, die Elektronikeinheit umfasst einen zweiten Anschluss. Der erste Anschluss und der zweite Anschluss sind miteinander verbindbar. Das mindestens eine Heizelement und der mindestens eine Temperatursensor sind mit dem ersten Anschluss elektrisch verbunden.

Der Behälter kann jedes spülmaschinenfeste Material umfassen, beispielsweise Stahl, Aluminium, Gusseisen, Porzellan, Steingut oder temperaturbeständige Kunststoffe.

Die Temperatursensoren können im Behältermaterial eingegossen sein oder sie können in dafür vorgesehenen Ausnehmungen angeordnet sein.

Die Elektronikeinheit kann ein Gehäuse umfassen, in welchem eine Steuereinheit angeordnet ist und an welchem ein Verbindungskabel zum Behälter und ein Stromversorgungskabel anschliessbar ist. Beispielsweise kann das Stromkabel mit einem Gerätestecker am Gehäuse der Elektronikeinheit eingesteckt werden.

Die Sensorkabel, d.h. die elektrischen Leiter zur Übermittlung der Signale der Temperatursensoren und/oder die Leistungsleitung, d.h. die elektrische Leitung zur Übermittlung des Leistungsstromes zur Erwärmung des Heizelements, können geschirmt ausgebildet sein.

Gemäss Erfindung ist die Steuereinheit durch einen ersten elektrischen Leiter, d.h. mit einem Kabel mit dem zweiten Anschluss verbunden. Der erste elektrische Leiter ist beispielsweise ein Strom- und Datenübermittlungskabel. Es können jedoch auch zwei zueinander parallel geführte Kabel vorgesehen sein. Die Kabel können abgeschirmt ausgeführt sein, um eine Beeinflussung, vor allem der Daten- oder Signalübermittlungskabel zu verhindern.

In einem nicht beanspruchten Beispiel ist die Elektronikeinheit mit dem zweiten Anschluss kombiniert. Somit führt die Stromversorgung direkt zum zweiten Anschluss. Beispielsweise kann die Stromversorgung über einen Gerätestecker erfolgen.

In einer Ausführungsform ist der Behälter doppelwandig und umfasst einen Innenboden, einen Aussenboden, eine Innenwand und eine Aussenwand und der mindestens eine Temperatursensor ist am Innenboden und/oder an der Innenwand angeordnet. Beispielsweise ist ein erster Temperatursensor an der Aussenseite des Innenbodens vorgesehen, der die Temperatur des Behälterbodens messen kann. Die ermittelten Temperaturdaten können zum Beispiel zum Schutz vor dem Anbrennen, für ein schonendes Erhitzen oder zum Karamellisieren verwendet werden. Beispielsweise ist ein zweiter Temperatursensor an der Aussenseite der Seitenwand im bodennahen Bereich vorgesehen, der die Temperatur einer im Aufnahmeraum befindlichen Speise ermitteln kann. Zum Beispiel kann die Temperatur von Frittieröl oder Siedewasser ermittelt werden. Beispielsweise ist ein dritter Temperatursensor in einem öffnungsnahen Bereich des Behälters an der Aussenseite der Seitenwand vorgesehen, der die Temperatur der Atmosphäre im Behälter ermitteln kann. Zum Beispiel kann die Temperatur von Wasserdampf im Behälter ermittelt werden. Zudem kann der Sensor zur Überkoch-Erkennung verwendet werden.

In einer Ausführungsform ist eine Isolation zwischen dem mindestens einen Heizelement und der Standfläche des Behälters vorgesehen. Der isolierte Behälter kann somit auf eine beliebige, auch nicht temperaturbeständige Unterlage gestellt werden. Zudem wird der Wärmeverlust über den Behälterboden reduziert, wodurch Wärmeenergie und dementsprechend auch elektrische Energie eingespart werden kann. Die Isolation kann über die gesamte Behälterbodenfläche vorgesehen sein oder kann nur im Bereich der Heizelemente vorgesehen sein.

In einer Ausführungsform ist die Isolation auf der Innenseite des Aussenbodens vorgesehen. Die Isolation ist somit innerhalb des geschlossenen doppelwandigen Behälters angeordnet, wodurch sie vor Feuchtigkeit und äusseren mechanischen Einflüssen geschützt ist. Dementsprechend kann der Behälter bedenkenlos in einem Geschirrspüler gereinigt werden.

In einer Ausführungsform ist der erste Anschluss an der Wand des Behälters angeordnet. Diese Bauweise erlaubt das einfache und sichere Verbinden des Behälters mit der Elektronikeinheit. Bei Behältern mit Griffen, kann der erste Anschluss in einen Griff integriert oder mit diesem kombiniert sein.

In einer Ausführungsform umfasst der erste Anschluss mindestens ein erstes Kontaktelement, welches mit dem mindestens einen Heizelement verbunden ist, und umfasst mindestens ein zweites Kontaktelement, welches mit dem mindestens einen Temperatursensor verbunden ist. Die Kontaktelemente können bündig mit einer Ebene ausgestaltet sein oder können als Kontaktstifte über eine Ebene hinausragen. Die Kupplung des ersten Anschlusses mit dem zweiten Anschluss erfolgt dann über die Kontaktstifte. Bei der ebenen Ausgestaltung kann die Kopplung magnetisch erfolgen.

In einer Ausführungsform umfasst die Elektronikeinheit eine Übertragungseinheit, mit welcher Daten von der Elektronikeinheit drahtlos an ein elektronisches Gerät übertragbar sind. Bekannte Übertragungen, wie Bluetooth, WLAN, ZigBee, NFC, Wibree oder WiMAX im Radiofrequenzbereich, sowie IrDA und optischer Richtfunk (FSO) im infraroten bzw. optischen Frequenzbereich sind einsetzbar. Alternativ können Daten, bzw. Signale leitungsgebunden übertragen werden.

In einer Ausführungsform umfasst der erste Anschluss mindestens einen Zusatzanschluss, an welchem ein elektronisches Gerät anschliessbar ist und/oder die Elektronikeinheit umfasst mindestens einen weiteren Anschluss, an welchem ein elektronisches Gerät anschliessbar ist, wobei das elektronische Gerät aus der Gruppe auswählbar ist, welche Mischelemente, wie Rührer, Lüfter, Luftumwälzer und Mixer umfasst, welche Sensoren wie Kerntemperatursensor, Feuchtigkeitssensor und Gewichtssensor umfasst, und welche Anzeige- und Bedienungselemente, wie Smartphone, Tablet, Laptop und PC umfasst. Beispielsweise kann der Zusatzanschluss und/oder der weitere Anschluss als USB- oder LAN-Anschluss ausgebildet sein.

In einer Ausführungsform umfasst die Stromversorgung einen zweiten elektrischen Leiter und es ist mindestens ein Einzug vorgesehen, mit welchem der zweite elektrische Leiter einziehbar ist. Der Einzug kann derart ausgestaltet sein, dass der elektrische Leiter teilweise oder ganz ausgezogen werden kann. Das vollständige Einziehen kann durch das Betätigen einer Einzugstaste oder durch ein Ausziehen des Kabels über eine kurze Strecke erwirkt werden.

Die erwähnten Ausführungsformen Kochgefässes lassen sich in beliebiger Kombination einsetzen, sofern sie sich nicht widersprechen.

Ein erfindungsgemässes Kochgefäss-System ist in Anspruch 10 beschrieben.

In einer Ausführungsform sind die Elektronikeinheiten direkt und/oder mit einer Verbindungseinheit miteinander verbunden. Bei der direkten Verbindung der Elektronikeinheiten können beispielsweise Sensorsignale, Steuerungssignale und Leistungsstrom von einer Elektronikeinheit zur dazu benachbarten Elektronikeinheit übertragen werden. Alternativ können nur Sensorsignale und Steuerungssignale übertragen werden und jede Elektronikeinheit kann eine eigene Stromversorgung umfassen.

In einer Ausführungsform ist ein Anzeige- und Bedienelement mit einer der Elektronikeinheiten oder mit der Verbindungseinheit drahtlos und/oder leitungsgebunden verbindbar. Es können wiederum die zuvor beschriebenen drahtlosen oder leitungsgebundenen Lösungen eingesetzt werden.

In einer Ausführungsform kann jede Elektronikeinheit eine eigene Stromversorgung umfassen oder alle Elektronikeinheiten können von einer gemeinsamen Stromversorgung gespiesen werden, wobei die gemeinsame Stromversorgung über die miteinander verbundenen Elektronikeinheiten oder über die Verbindungseinheit erfolgen kann.

Die erwähnten Ausführungsformen des Kochgefäss-Systems lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine schematische Schnittansicht eines nicht beanspruchten Kochgefässes;
Fig. 2 eine schematische Schnittansicht einer weiteren Ausführungsform eines nicht beanspruchten Kochgefässes;
Fig. 3 eine schematische Draufsicht eines nicht beanspruchten Kochgefäss-Systems; und
Fig. 4 eine schematische Draufsicht einer Ausführungsform eines erfindungsgemässen Kochgefäss-Systems mit einem erfindungsgemässen Kochgefäss.

### DETAILLIERTE BESCHREIBUNG DER ERFINDUNG

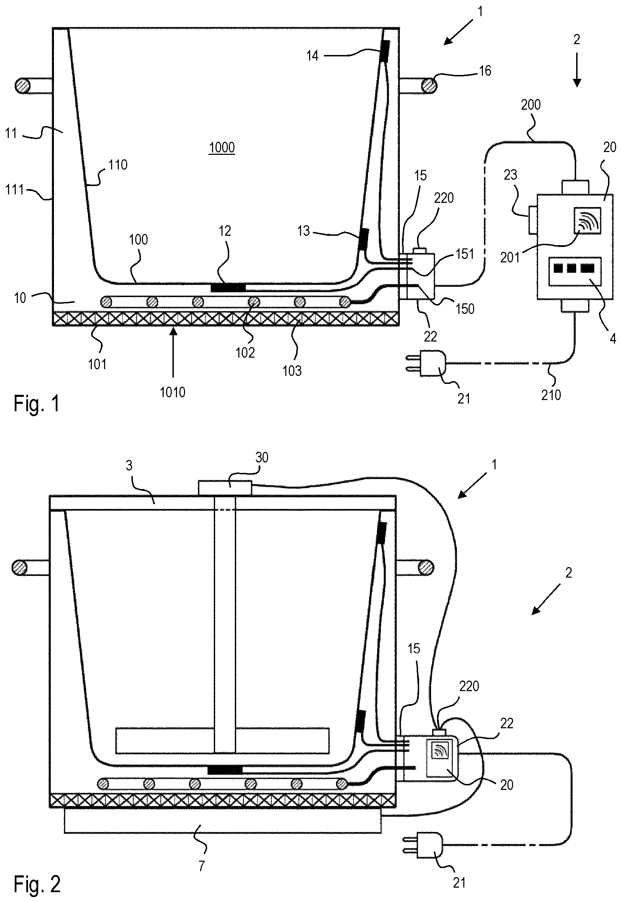

Die Figur 1 zeigt eine schematische Schnittansicht eines Kochgefässes. Das Kochgefäss umfasst einen Behälter 1 mit einem Boden 10 und einer geschlossen umlaufenden Wand 11, welche sich vom Rand des Bodens 10 aus nach oben erstreckt. Der Boden 10 ist doppelwandig ausgebildet und umfasst einen Innenboden 100 und einen Aussenboden 101. Die Wand 11 ist ebenfalls doppelwandig ausgebildet und umfasst eine Innenwand 110 und eine Aussenwand 111. Der Boden 10, respektive der Innenboden 100 begrenzt zusammen mit der Wand 11, respektive der Innenwand 110 einen Aufnahmeraum 1000, in welchem Speisen unter Wärmeeinwirkung zubereitet werden können. Der obere Rand der Wand 11 umfasst eine Öffnung, durch welche Speisen in den Aufnahmeraum 1000 einführbar sind. Mindestens ein Heizelement 102 ist unterhalb des Aufnahmeraums 1000 im Boden 10 des Behälters 1 angeordnet, d.h. zwischen dem Innenboden 100 und dem Aussenboden 101. Zwischen dem Heizelement 102 und dem Aussenboden 101 ist eine Isolation 103 angeordnet, welche sich im Wesentlichen über die gesamte Fläche der Innenseite des Aussenbodens 101 erstreckt. Die Aussenseite des Aussenbodens 101 umfasst die Standfläche 1010 des Kochgefässes. An der Aussenseite des Innenbodens 100 ist mindestens ein erster Temperatursensor 12 angeordnet. Der erste Temperatursensor 12 misst die Bodentemperatur, welche unter anderem dafür genutzt werden kann, um ein Anbrennen zu verhindern, um ein schonendes Erhitzen zu gewährleisten oder um ein kontrolliertes Karamellisieren zu ermöglichen. An der Aussenseite der Innenwand 110 ist mindestens ein zweiter Temperatursensor 13 im bodennahen Bereich angeordnet. Ein solcher Sensor kann zur Erfassung der Produkttemperatur dienen, d.h. zur Erfassung der im Behälter 1 aufgenommenen Flüssigkeit, beispielsweise beim Frittieren oder beim Sieden. Mindestens ein dritter Temperatursensor 14 im öffnungsnahen Bereich der Aussenseite der Innenwand 110 angeordnet. Der dritte Temperatursensor 14 kann zu Ermittlung der Atmosphärentemperatur im Kochgefäss dienen, beispielsweise beim Wasserkochen. Er kann ebenfalls bei einem Überkochschutz eingesetzt werden. Ein erster Anschluss 15 ist an der Wand 11 des Behälters 1 angeordnet. Die Heizelemente 102 sind durch elektrische Leitungen mit ersten Kontaktelementen 150 des ersten Anschlusses 15 verbunden und die Temperatursensoren 12,13,14 sind durch elektrische Leitungen mit zweiten Kontaktelementen 151 des ersten Anschlusses 15 verbunden. Der erste Anschluss 15 in der dargestellten Ausführungsform ist der männliche Teil eines Steckers mit den Kontaktstiften. An der Aussenwand 111 sind an sich gegenüberliegenden Seiten des Behälters 1 Griffe 16 vorgesehen.

Die Elektronikeinheit 2 umfasst eine Steuereinheit 20, eine Übermittlungseinheit 201 und eine Anzeige- und Bedienelement 4, welche in einem gemeinsamen Gehäuse untergebracht sind. Mit dem Anzeige- und Bedienelement 4 kann die Temperatur am Behälter 1 vorgegeben oder verändert werden. Ein erster elektrischer Leiterweiter 200 verbindet die Elektronikeinheit 2, bzw. die Steuereinheit 20 mit einem zweiten Anschluss 22. Der zweite Anschluss 22 umfasst die weiblichen Gegenkontakte zu den männlichen Stiftkontakten 150,151 des ersten Anschlusses 15. Der zweite Anschluss 22 umfasst mindestens einen Zusatzanschluss 220, an welchem weitere elektronische Geräte anschliessbar sind. Die Elektronikeinheit 2 umfasst eine Stromversorgung 21 mit einem zweiten elektrischen Leiter 210. Weiter umfasst die Elektronikeinheit 2 einen weiteren Anschluss 23 für weitere elektronische Geräte.

Die Figur 2 zeigt eine schematische Schnittansicht einer weiteren Ausführungsform eines Kochgefässes. Im Unterschied zur Ausführungsform der Figur 1, ist die Elektronikeinheit 2 in den zweiten Anschluss 22 integriert, bzw. sind die Steuereinheit 20 und der zweite Anschluss 22 der Elektronikeinheit 2 in einem gemeinsamen Gehäuse untergebracht. Am Zusatzanschluss 220 ist ein Rührer 30 angeschlossen, welcher an einem Deckel 3 angeordnet ist, welcher auf der Öffnung des Behälters 1 angeordnet ist. Zudem ist eine Waage 7 am Zusatzanschluss 220 angeschlossen. Alternativ kann die Waage drahtlos mit der Elektronikeinheit oder einem Anzeige- und Bedienelement verbunden sein. Der Behälter 1 ist auf der Waage 7 angeordnet.

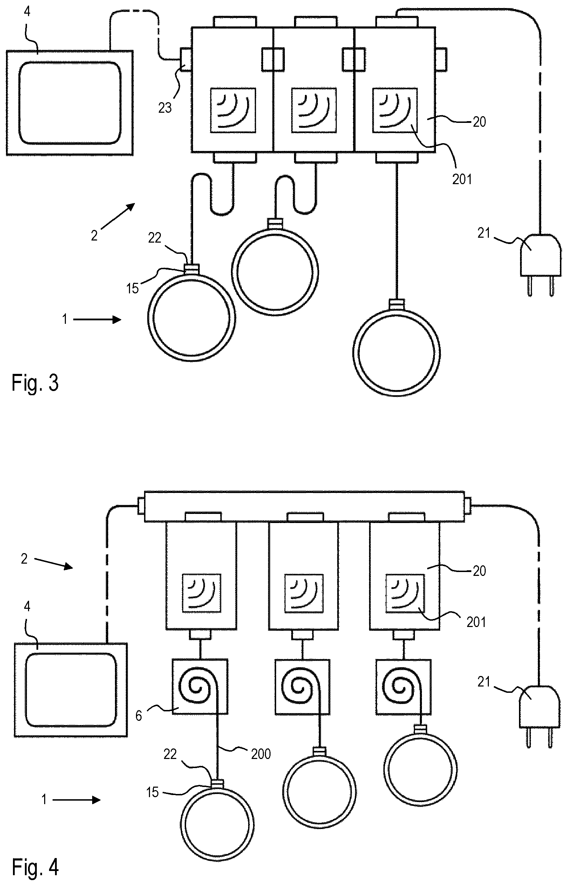

Die Figur 3 zeigt eine schematische Draufsicht eines Kochgefäss-Systems. Dargestellt ist ein System mit drei miteinander verbundenen Elektronikeinheiten 2 und drei Behältern 1, wobei jeweils ein Behälter 1 mit seinem ersten Anschluss 15 mit dem zweiten Anschluss 22 der entsprechenden Elektronikeinheit 2 verbunden ist. Ein Anzeige- und Bedienelement 4 ist an einem weiteren Anschluss 23 einer der Elektronikeinheiten 2 angeschlossen und eine Stromversorgung 21 ist an einer der Elektronikeinheiten 2 angeschlossen. Mit dem einen Anzeige- und Bedienelement 4 können alle Behälter 1 angesteuert werden und können die Messwerte aller Behälter 1 angezeigt werden. Mit der Stromversorgung 21 können alle Elektronikeinheiten 2, bzw. alle Behälter 1 gespiesen, d.h. mit elektrischem Strom versorgt werden.

Die Figur 4 zeigt eine schematische Draufsicht einer Ausführungsform eines erfindungsgemässen Kochgefäss-Systems. Dargestellt ist ein System mit drei Elektronikeinheiten 2 und drei Behältern 1, wobei die Elektronikeinheiten 2 mit einer gemeinsamen Verbindungseinheit 5 miteinander verbunden sind. Mit der Verbindungseinheit 5 können Strom und Signale von der jeweiligen Elektronikeinheit 2 zu einem gemeinsamen Anzeige- und Bedienungselement 4 übertragen werden. Die Verbindungseinheit 5 verfügt über eine gemeinsame Stromzufuhr 21. Zwischen der Steuereinheit 20 und dem zweiten Anschluss 22 der Elektronikeinheit 2 ist ein Einzug 6 vorgesehen. Mit dem Einzug 6 kann der erste elektrische Leiter 200 vorgespannt eingezogen werden. Am Ende des ersten elektrischen Leiters 200 ist ein zweiter Anschluss 22 vorgesehen, welcher mit dem ersten Anschluss 15 des jeweiligen Behälters 1 verbindbar ist.

### BEZUGSZEICHENLISTE

| | | | |
|---|---|---|---|
| 1 | Behälter | 16 | Griff |
| 10 | Boden | 2 | Elektronikeinheit |
| 100 | Innenboden | 20 | Steuereinheit |
| 1000 | Aufnahmeraum | 200 | erster elektrischer Leiter |
| 101 | Aussenboden | | |
| 1010 | Standfläche | 201 | Übermittlungseinheit |
| 102 | Heizelement | 21 | Stromversorgung |
| 103 | Isolation | 210 | zweiter elektrischer Leiter |
| 11 | Wand | 22 | zweiter Anschluss |
| 110 | Innenwand | 220 | Zusatzanschluss |
| 111 | Aussenwand | 23 | weiterer Anschluss |
| 12 | erster Temperatursensor | 3 | Deckel |
| 13 | zweiter Temperatursensor | 30 | Rührer |
| | | 4 | Anzeige- und Bedienelement |
| 14 | dritter Temperatursensor | | |
| | | 5 | Verbindungseinheit |
| 15 | erster Anschluss | 6 | Einzug |
| 150 | erstes Kontaktelement | 7 | Waage |
| 151 | zweites Kontaktelement | | |

## Patentansprüche

1. Ein Kochgefäss umfassend:
- einen Behälter (1) mit einem Boden (10) und einer geschlossen umlaufender Wand (11), welche sich vom Boden (10) aus erstreckt,
wobei der Boden (10) und die Wand (11) einen Aufnahmeraum (1000) begrenzen,
- mindestens ein Heizelement (102), welches unterhalb des Aufnahmeraums (1000) angeordnet ist,
- mindestens einen Temperatursensor (12,13,14), welcher im Boden (10) und/oder in der Wand (11) des Behälters (1) angeordnet ist,
- eine Elektronikeinheit (2), welche eine Steuereinheit (20) zur Steuerung der Temperatur des mindestens einen Heizelements (102) und eine Stromversorgung (21) umfasst,
wobei das Heizelement (102) im Boden (10) des Behälters (1) angeordnet ist, wobei der Behälter (1) einen ersten Anschluss (15) umfasst, wobei die Elektronikeinheit (2) einen zweiten Anschluss (22) umfasst und wobei der erste Anschluss (15) und der zweite Anschluss (22) miteinander verbindbar sind, wobei das mindestens eine Heizelement (102) und der mindestens eine Temperatursensor (12,13,14) mit dem ersten Anschluss (15) elektrisch verbunden sind, wobei die Steuereinheit (20) durch ein erstes elektrisches Kabel (200) mit dem zweiten Anschluss (22) verbunden ist, **dadurch gekennzeichnet, dass** die Stromversorgung (21) ein zweites elektrisches Kabel (210) umfasst und dass zwischen der Steuereinheit (20) und dem zweiten Anschluss (22) mindestens ein Einzug (6) vorgesehen ist, mit welchem das erste elektrische Kabel (200) zusammen mit dem zweiten Anschluss (22) in Richtung Steuereinheit (20) einziehbar ist.

2. Das Kochgefäss gemäss Anspruch 1, wobei ein weiterer Einzug vorgesehen ist, mit welchem das zweite elektrische Kabel (210) einziehbar ist.

3. Das Kochgefäss gemäss einem der vorangehenden Ansprüche, wobei der Behälter (1) doppelwandig ist und einen Innenboden (100), einen Aussenboden (101), eine Innenwand (110) und eine Aussenwand (111) umfasst und wobei der mindestens eine Temperatursensor (12,13,14) am Innenboden (100) und/oder an der Innenwand (110) angeordnet ist.

4. Das Kochgefäss gemäss einem der vorangehenden Ansprüche, wobei eine Isolation (103) zwischen dem mindestens einen Heizelement (102) und der Standfläche (1010) des Behälters (1) vorgesehen ist.

5. Das Kochgefäss gemäss Anspruch 5, wobei die Isolation (103) auf der Innenseite des Aussenbodens (101) vorgesehen ist.

6. Das Kochgefäss gemäss einem der vorangehenden Ansprüche, wobei der erste Anschluss (15) an der Wand (11) des Behälters (1) angeordnet ist.

7. Das Kochgefäss gemäss einem der vorangehenden Ansprüche, wobei der erste Anschluss (15) mindestens ein erstes Kontaktelement (150) umfasst, welches mit dem mindestens einen Heizelement (102) verbunden ist, und mindestens ein zweites Kontaktelement (151) umfasst, welches mit dem mindestens einen Temperatursensor (12,13,14) verbunden ist.

8. Das Kochgefäss gemäss einem der vorangehenden Ansprüche, wobei die Elektronikeinheit (2) eine Übertragungseinheit (201) umfasst, mit welcher Daten von der Elektronikeinheit (2) drahtlos an ein elektronisches Gerät übertragbar sind.

9. Das Kochgefäss gemäss einem der vorangehenden Ansprüche, wobei der erste Anschluss (15) mindestens einen Zusatzanschluss (220) umfasst, an welchem ein elektronisches Gerät anschliessbar ist und/oder wobei die Elektronikeinheit (2) mindestens einen weiteren Anschluss (23) umfasst, an welchem ein elektronisches Gerät anschliessbar ist, wobei das elektronische Gerät aus der Gruppe auswählbar ist, welche Mischelemente (30), wie Rührer, Lüfter, Luftumwälzer und Mixer umfasst, welche Sensoren, wie Kerntemperatursensor, Feuchtigkeitssensor und Gewichtssensor (7) umfasst, und welche Anzeige- und Bedienungselemente (4), wie Smartphone, Tablet, Laptop und PC umfasst.

10. Ein Kochgefäss-System mit mindestens einem Kochgefäss gemäss einem der Ansprüche 1 bis 9, umfassend mindestens zwei Elektronikeinheiten (2), wobei die Elektronikeinheiten (2) derart miteinander verbindbar sind, dass elektrische Signale und/oder Leistungsströme übertragbar sind.

11. Das Kochgefäss-System gemäss Anspruch 10, wobei die Elektronikeinheiten (2) direkt und/oder mit einer Verbindungseinheit (5) miteinander verbunden sind.

12. Das Kochgefäss-System gemäss Anspruch 10 oder 11, wobei ein Anzeige- und Bedienelement (4) mit einer der Elektronikeinheiten (2) oder mit der Verbindungseinheit (5) drahtlos und/oder leitungsgebunden verbindbar ist.

13. Das Kochgefäss-System gemäss einem der Ansprüche 10 bis 12, wobei jede Elektronikeinheit (2) eine eigene Stromversorgung (21) umfasst oder wobei alle Elektronikeinheiten (2) eine gemeinsame Stromversorgung (21) umfassen, wobei die gemeinsame Stromversorgung über die miteinander verbundenen Elektronikeinheiten (2) oder über die Verbindungseinheit erfolgen kann.

## Claims

1. A cooking vessel comprising:
- a container (1) having a bottom (10) and a closed peripheral wall (11) extending from the bottom (10),
wherein the bottom (10) and the wall (11) define a receiving space (1000),
- at least one heating element (102), which is arranged below the receiving space (1000),
- at least one temperature sensor (12,13,14), which is arranged in the bottom (10) and/or in the wall (11) of the container (1),
- an electronic unit (2), which comprises a control unit (20) for controlling the temperature of the at least one heating element (102) and a power supply (21),
wherein the heating element (102) is arranged in the bottom (10) of the container (1), wherein the container (1) comprises a first connection (15), wherein the electronic unit (2) comprises a second connection (22) and wherein the first connection (15) and the second connection (22) are connectable to each other, wherein the at least one heating element (102) and the at least one temperature sensor (12,13,14) are electrically connected to the first connection (15), the control unit (20) being connected to the second connection (22) by a first electrical cable (200), **characterized in that** the power supply (21) comprises a second electrical cable (210) and **in that** at least one retraction (6) is provided between the control unit (20) and the second connection (22), by means of which the first electrical cable (200) can be retracted together with the second connection (22) in the direction of the control unit (20).

2. The cooking vessel according to claim 1, wherein a further retraction is provided, with which the second electrical cable (210) can be retracted.

3. The cooking vessel according to any one of the preceding claims, wherein the container (1) is double-walled and comprises an inner bottom (100), an outer bottom (101), an inner wall (110) and an outer wall (111), and wherein the at least one temperature sensor (12,13,14) is arranged on the inner bottom (100) and/or on the inner wall (110) .

4. The cooking vessel according to any one of the preceding claims, wherein an insulation (103) is provided between the at least one heating element (102) and the standing surface (1010) of the container (1).

5. The cooking vessel according to claim 5, wherein the insulation (103) is provided on the inside of the outer bottom (101).

6. The cooking vessel according to any one of the preceding claims, wherein the first connection (15) is arranged on the wall (11) of the container (1).

7. The cooking vessel according to any one of the preceding claims, wherein the first connection (15) comprises at least one first contact element (150) connected to the at least one heating element (102) and at least one second contact element (151) connected to the at least one temperature sensor (12,13,14).

8. The cooking vessel according to any one of the preceding claims, wherein the electronic unit (2) comprises a transmission unit (201) with which data can be transmitted wirelessly from the electronic unit (2) to an electronic device.

9. The cooking vessel according to one of the preceding claims, wherein the first connection (15) comprises at least one additional connection (220) to which an electronic device can be connected and/or wherein the electronic unit (2) comprises at least one further connection (23) to which an electronic device can be connected, wherein the electronic device can be selected from the group which comprises mixing elements (30), such as stirrers, fans, air circulators and mixers, which comprises sensors, such as core temperature sensor, humidity sensor and weight sensor (7), and which comprises display and operating elements (4), such as smartphone, tablet, laptop and PC.

10. A cooking vessel system with at least one cooking vessel according to one of claims 1 to 9, comprising at least two electronic units (2), wherein the electronic units (2) can be connected to one another in such a way that electrical signals and/or power currents can be transmitted.

11. The cooking vessel system according to claim 10, wherein the electronic units (2) are connected to each other directly and/or with a connection unit (5).

12. The cooking vessel system according to claim 10 or 11, wherein a display and control element (4) can be connected to one of the electronic units (2) or to the connection unit (5) by wireless and/or wired means.

13. The cooking vessel system according to any one of claims 10 to 12, wherein each electronic unit (2) comprises a separate power supply (21) or wherein all electronic units (2) comprise a common power supply (21), wherein the common power supply can be provided via the interconnected electronic units (2) or via the connection unit.

## Revendications

1. Un récipient de cuisson comprenant :
- un récipient (1) avec un fond (10) et une paroi périphérique fermée (11) qui s'étend à partir du fond (10),
le fond (10) et la paroi (11) délimitant un espace de réception (1000),
- au moins un élément chauffant (102), qui est disposé en dessous de l'espace de réception (1000),
- au moins un capteur de température (12,13,14), qui est disposé dans le fond (10) et/ou dans la paroi (11) du récipient (1),
- une unité électronique (2) qui comprend une unité de commande (20) pour commander la température de l'au moins un élément chauffant (102) et une alimentation électrique (21),
l'élément chauffant (102) étant disposé dans le fond (10) du récipient (1), le récipient (1) comprenant un premier raccordement (15), l'unité électronique (2) comprenant un deuxième raccordement (22) et le premier raccordement (15) et le deuxième raccordement (22) pouvant être reliés entre eux, le au moins un élément chauffant (102) et le au moins un capteur de température (12,13,14) étant reliés électriquement au premier raccordement (15), l'unité de commande (20) étant reliée au deuxième raccordement (22) par un premier câble électrique (200), **caractérisé en ce que** l'alimentation électrique (21) comprend un deuxième câble électrique (210) et **en ce qu'**il est prévu entre l'unité de commande (20) et le deuxième raccordement (22) au moins un rétracteur (6) avec lequel le premier câble électrique (200) peut être rétracté en même temps que le deuxième raccordement (22) en direction de l'unité de commande (20).

2. Le récipient de cuisson selon la revendication 1, dans lequel il est prévu un autre rétracteur avec lequel le deuxième câble électrique (210) peut être rétracté.

3. Le récipient de cuisson selon l'une des revendications précédentes, dans lequel le récipient (1) est à double paroi et comprend un fond intérieur (100), un fond extérieur (101), une paroi intérieure (110) et une paroi extérieure (111) et dans lequel le au moins un capteur de température (12,13,14) est disposé sur le fond intérieur (100) et/ou sur la paroi intérieure (110).

4. Le récipient de cuisson selon l'une des revendications précédentes, dans lequel une isolation (103) est prévue entre ledit au moins un élément chauffant (102) et la surface de support (1010) du récipient (1).

5. Le récipient de cuisson selon la revendication 5, dans lequel l'isolation (103) est prévue sur le côté intérieur du fond extérieur (101).

6. Le récipient de cuisson selon l'une des revendications précédentes, dans lequel le premier raccordement (15) est disposé sur la paroi (11) du récipient (1).

7. Le récipient de cuisson selon l'une des revendications précédentes, dans lequel le premier raccordement (15) comprend au moins un premier élément de contact (150) relié à l'au moins un élément chauffant (102) et au moins un deuxième élément de contact (151) relié à l'au moins un capteur de température (12,13,14).

8. Le récipient de cuisson selon l'une des revendications précédentes, dans lequel l'unité électronique (2) comprend une unité de transmission (201) avec laquelle des données peuvent être transmises sans fil de l'unité électronique (2) à un appareil électronique.

9. Le récipient de cuisson selon l'une des revendications précédentes, dans lequel le premier raccordement (15) comprend au moins un raccordement supplémentaire (220) auquel un appareil électronique peut être raccordé et/ou dans lequel l'unité électronique (2) comprend au moins un raccordement supplémentaire (23) auquel un appareil électronique peut être raccordé, l'appareil électronique pouvant être choisi dans le groupe comprenant des éléments de mélange (30), tels que des agitateurs, des ventilateurs, des brasseurs d'air et des mélangeurs, comprenant des capteurs, tels que des capteurs de température à cœur, des capteurs d'humidité et des capteurs de poids (7), et comprenant des éléments d'affichage et de commande (4), tels que des smartphones, des tablettes, des ordinateurs portables et des PC.

10. Un système de récipient de cuisson avec au moins un récipient de cuisson selon l'une des revendications 1 à 9, comprenant au moins deux unités électroniques (2), les unités électroniques (2) pouvant être reliées entre elles de telle sorte que des signaux électriques et/ou des courants de puissance puissent être transmis.

11. Le système de récipient de cuisson selon la revendication 10, dans lequel les unités électroniques (2) sont reliées entre elles directement et/ou avec une unité de connexion (5).

12. Le système de récipient de cuisson selon la revendication 10 ou 11, dans lequel un élément d'affichage et de commande (4) peut être relié sans fil et/ou par fil à l'une des unités électroniques (2) ou à l'unité de connexion (5).

13. Le système de récipient de cuisson selon l'une des revendications 10 à 12, dans lequel chaque unité électronique (2) comprend sa propre alimentation électrique (21) ou dans lequel toutes les unités électroniques (2) comprennent une alimentation électrique commune (21), l'alimentation électrique commune pouvant être fournie par les unités électroniques (2) reliées entre elles ou par l'unité de connexion.
